# EUROPEAN PATENT SPECIFICATION

(11) **EP 0 585 990 B1**
(45) Date of publication and mention of the grant of the patent: **16.10.1996**
(21) Application number: 93202216.3
(22) Date of filing: 27.07.1993
(51) Int. Cl.: B60J 5/10

(54) **Closure and stiffening system for the rear access door portal frame of vans**
Verschluss- und Versteifungssystem für den Portalrahmen der hinteren Tür eines Lastwagens
Système fermeture et de renforcement pour le portique de la porte arrière d'un camion

(30) Priority: 03.09.1992 IT RE920066
(43) Date of publication of application: 09.03.1994
(73) Proprietor: FURGOCAR - S.r.L., I-42100 Reggio Emilia (IT)
(72) Inventor: Panciroli, Marco, I-42100 Reggio Emilia (IT)
(74) Representative: Corradini, Corrado

(56) References cited:
- US-A- 4 263 751
- US-A- 4 852 933

## Description

This invention relates in particular to vans or semitrailers comprising a parallelepiped load compartment supported and fixed on the underlying vehicle frame.

In this type of construction, which with the passage of time has assumed ever increasing length and cross-sectional dimensions, one of the problems not yet totally solved is the rigidity, and in particular the torsional rigidity, of the load compartment.

The problem is aggravated by the fact that the dimensional increase has to be achieved without penalizing the weight of the load compartment, with the result that its walls have necessarily to be reduced in thickness.

Depending on the transported load, which can either rest on the floor or be suspended from the compartment roof, when inertial forces arise deriving from the longitudinal or transverse acceleration to which the vehicle is subjected during its travel, the vehicle is subjected to inevitable deforming stresses.

The deformation induced is greater the thinner the van walls and the greater their dimensions, and give rise to two different problems.

Firstly, deformations repeated in one and then in the opposite direction result in fatigue failure, especially in the portal frame which surrounds the van door space at the rear end.

Secondly, said deformations stress the two door wings, which then unload all stresses onto the hinges which are bolted along the frame uprights, and onto all the other door fastening members.

The object of the present invention is to provide a particular fastening and at the same time stiffening system which on the one hand ensures indeformability of the rear door of the van and hence its perfect sealing by the closure door, and on the other hand contributes considerably to the overall rigidity of the van body by limiting torsional and longitudinal deformations, and hence drastically reducing the possibility of fatigue failure.

In known constructions the rear end of the van comprises a quadrangular aperture generally surrounded by a portal frame closed by two door wings hinged on the portal frame uprights.

Torsional deformation of said rear end results in a variation in the form of the portal frame, which tends to assume the shape of a rhombus, and lose its correct quadrangular shape.

To oppose said portal frame deformation the known art uses fastening means consisting of one or more rods parallel to the door hinging axes which are fixed so that they cannot slide axially on the doors and are provided at their ends with claws which on rotating the rods engage in suitable seats fixed by bolts on the portal frame cross-members.

The arrangement of said fastening rods locks the door to the portal frame to prevent its opening, but the nature of these fastening means is such that the forces causing the deformation of the portal frame are transmitted to all the bolted members, hinges included, resulting in the aforesaid undesirable phenomena.

In this respect the known fastening system does not prevent such deformation, which can result in the corners of the door wings jamming against the portal frame, and which has the further negative effect of deforming the seal gaskets and compromising perfect insulation of the van interior against the external environment.

Examples of the known constructions are shown in US-A-4852933 and US-A-4263751.
US-A-4852933 shows a reinforcing latching means for maintaining the integrity of the upper tailgate-sidewall joint closure in a refuse carrier with a vertically hinged tailgate assembly including a handle disposed along the bottom of the tailgate.
US-A-4263751 shows an insulated door for a refrigeration vehicle including spaced walls between which there is an insulation material.
Hardware such as hinges and latches are mounted to the door by fastening the hardware to a rigid support mounted on the outside wall of the door, and providing openings in the support for accommodating fastening elements.
These constructions also have the above described defects.

These defects are overcome by the invention which, in combination with the known fastening means, provides stiffening rods which are fixed to the door wings in such a manner as to be able to slide axially but in a direction not parallel to the hinging axis of the door wings, said rods being arranged to be put under tension and at their ends comprising hooks arranged to operate under traction and to engage in suitable seats fixed to the horizontal sides of the portal frame.

The means for putting said rods under tension can be of various types, either internal or external to the rods.

For example they can cause said rods to undergo elongation and shortening to put them under tension, and comprise mechanical or hydraulic systems.

Alternatively they can modify the position of the coupling seats in which the end hooks of the rods engage, by increasing the distance apart of said coupling seats.

These and further constructional and operational merits of the invention will be more apparent from the detailed description given hereinafter with reference to the figures of the accompanying drawings, which show two preferred embodiments of the invention by way of non-limiting example.

Figure 1 is a rear view of a van to which the invention is applied, this being shown on the right as a first embodiment and on the left as a second embodiment.

Figure 2 is a partly sectional rear view of the first embodiment of the invention.

Figure 3 shows the device of Figure 2 in a different operating position.

Figure 4 is a partly sectional rear view of the second embodiment of the invention.

Figure 5 is a section on the line V-V of Figure 4.

Figure 6 shows a third preferred embodiment of the invention.

Figure 7 is an enlarged section on the line VII-VII of Figure 6.

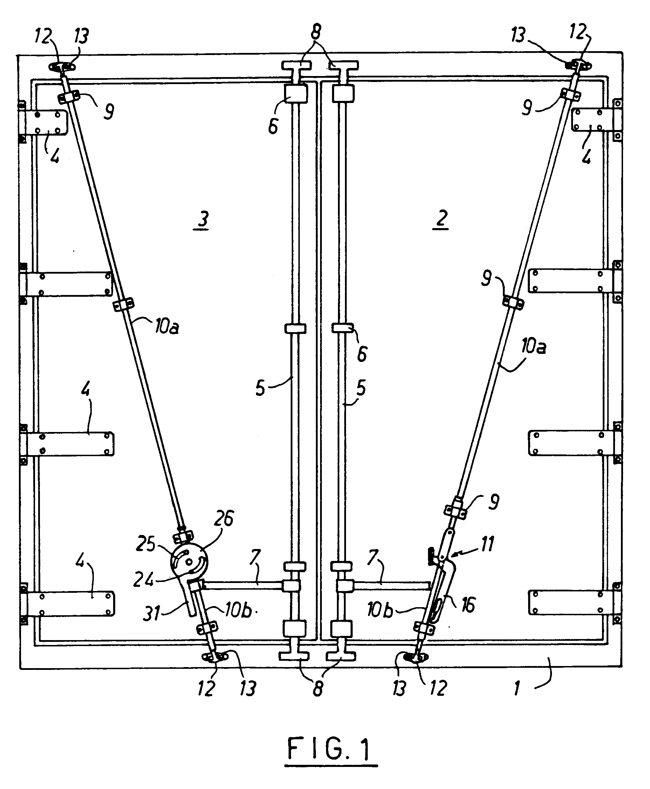

Figures 1, 2 and 3 show the rear end of a van comprising a frame 1, which is closed by two door wings 2 and 3 hinged to the frame by hinges 4.

The door wing 2 comprises usual fastening means consisting of a rod 5 axially locked in suitable seats 6 fixed securely to the door wing 2, said rod being able to be rotated about itself by the operation of a large handle 7 and being provided at its ends with claws 8 which engage in suitable seats provided in the portal frame 1.

Said claws 8, which are not described in detail as they are of usual type, provide fastening both in a direction perpendicular to the plane of the door wing 2 and in the direction of the rod 5.

According to the invention, to the door wing 2 there are also securely fixed seats 9 within which two aligned rods 10a and 10b can slide axially.

Said rods 10a and 10b each carry at their end a hammer head 12 which on axial sliding of the rods can engage in and disengage from a pair of hooks 13 fixed to the frame 1.

Means 11 are provided at the facing ends of the rods 10a and 10b to subject them to axial sliding.

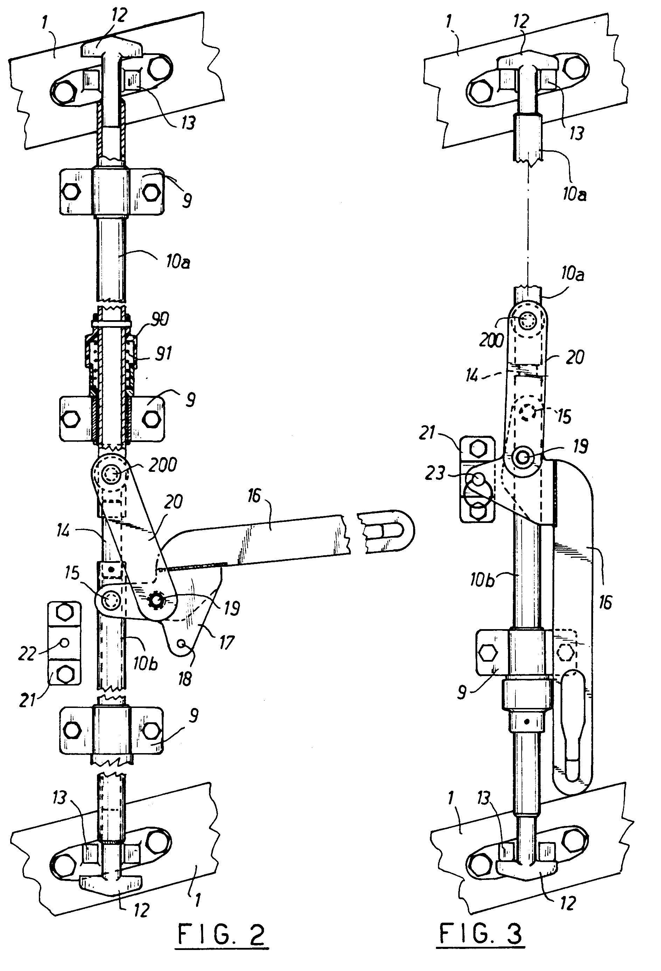

The axis along which the two rods 10a and 10b are positioned is conveniently inclined to the axis on which the door wing 2 is hinged to the van frame 1, so that when the two rods 10a and 10b are put under tension by the mechanism 11 and the hammer heads 12 engage in the respective hooks 13, a substantially indeformable structure is created in collaboration with the van frame 1, the forces which prevent the deformation of the structure being to no extent transmitted to the door wing 2 because of the slidable engagement of the rods 10a and 10b in their respective seats 9. Figures 2 and 3 show in greater detail the arrangement of the means 11 for mutually moving the rods.

As can be easily seen from said figures, the rod 10b is in the form of a tubular element into which a shaft 14 is inserted and axially locked, and has its other end inserted into and freely slidable within the rod 10a, which is also in the form of a tubular element.

On the rod 10b there is fixed a pin 15 on which an element 16 forming the system operating handle is pivoted.

Said element 16 comprises an appendix with a hole 18 the purpose of which is explained hereinafter.

To the element 16 there is fixed a pin 19 on which two connection pieces 20 are pivoted, their other ends being pivoted to the element 10a by a pin 200.

Between that seat 9 closest to the pin 200 and a stop 90 rigid with the rod 10a there is provided a compression spring 91 which maintains the rod 10a urged upwards to ensure disengagement of the means 12 and 13.

On rotating the element 16 from the position shown in Figure 2 to the position shown in Figure 3, the rods 10a and 10b are pulled towards each other with consequent engagement of the arms of the hammer head 12 in appropriate hooks 13, the rods consequently being put under tension.

When in the position shown in Figure 3, in which the system is in its fastened state, the appendix 17 and the relative hole 18 correspond in position with an element 21 fixed to the door wing 2, such that the hole 18 is aligned with a hole 22 provided in the element 21, so that a pin can be inserted through both holes and then provided with a security seal.

Figures 1, 4 and 5 show the second embodiment of the invention. In said figures those elements corresponding to those of Figures 1, 2 and 3 are indicated by the same reference numerals.

From said figures it can be seen that the rods 10a and 10b are again of tubular form.

In proximity to the two facing ends of said rods there is fixed to each of them a pin 24 which projects from both sides of the rod.

The two pins 24 are inserted respectively into two pairs of corresponding slots 25 provided in a pair of parallel circular discs 26 held together by a hub 27.

The slots 25 are shaped in such a manner that their eccentric axis symmetrically and progressively approaches the centre of the discs 26.

The hub 27 of the discs 26 is mounted on a pin 28 branching from a plate 29 securely fixed to the door wing 3.

A projecting handle 31 for rotating the discs 26 is fixed between the discs 26 by weld spots 30.

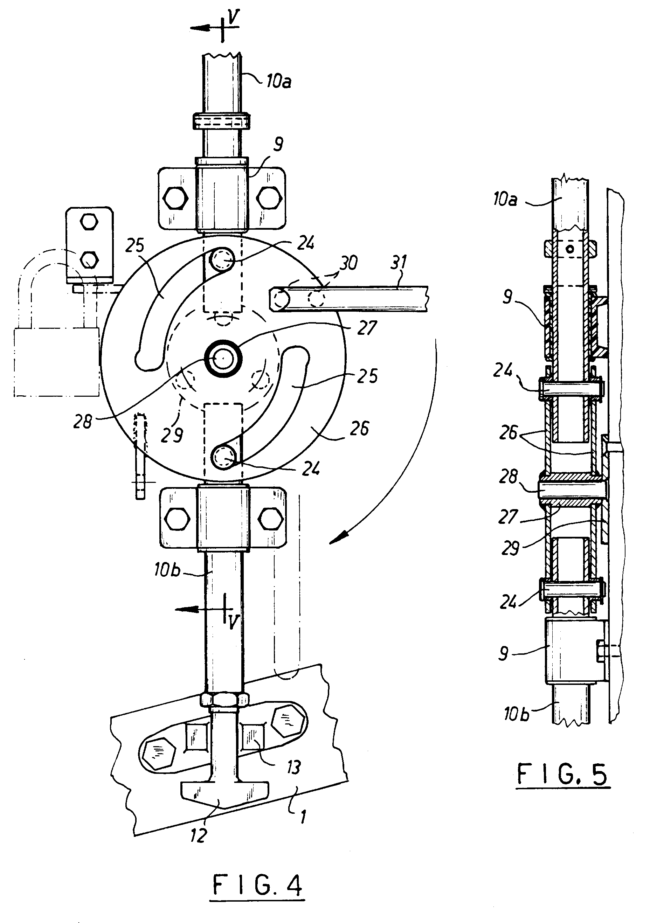

In Figure 4 the rods 10a and 10b are shown in their maximum spaced-apart position from which, by rotating the discs 26 clockwise by means of the handle 31, said rods approach one another by virtue of the pins 24 sliding along the slots 25.

Because of said approaching movement, the arms of each hammer head 12 engage in the hooks provided on the element 13, and the two rods 10a and 10b are put under tension so contributing to the stiffening of the van frame 1 without loading the door wing 3 with any force.

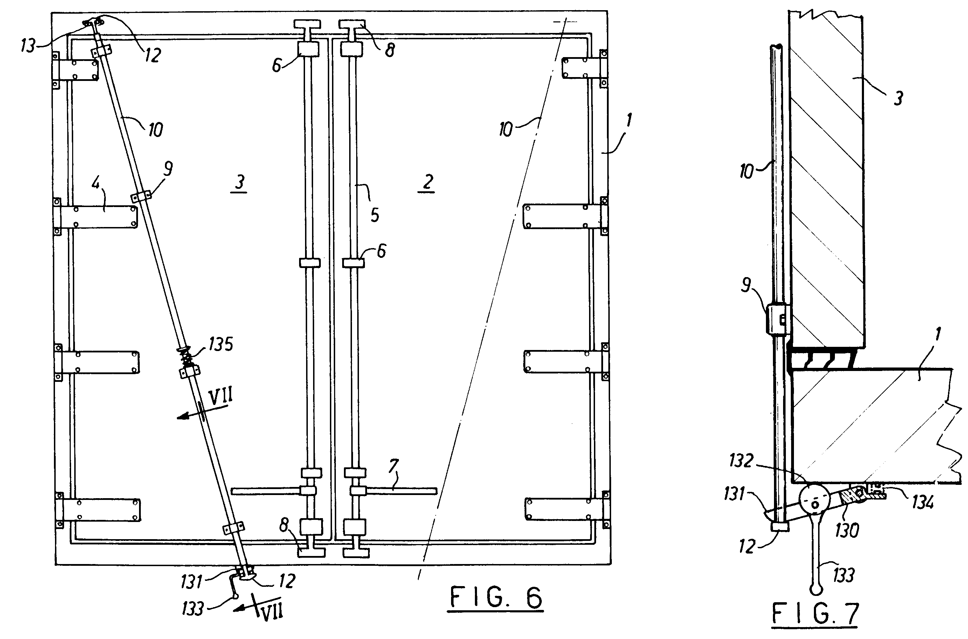

Figures 6 and 7 show a third embodiment of the invention.

In this embodiment the rods 10a and 10b are replaced by a single rod 10, which is also mounted slidable within seats 9. At its ends the rod 10 carries hammer heads 12 identical to those heretofore described.

The upper hammer head engages in a hook 13 fixed to the side of the frame 1, as in the aforedescribed embodiments.

The lower hammer head 12 engages in a movable hook 130, which swivels with the fork 131 under the action of the lever 133 of a cam mechanism 132, or of an equivalent hydraulic device.

A spring 134 maintains the movable hook raised when inactive.

A further spring 135 coaxial to the rod 10 maintains this latter in position when the door wing 3 is open.

## Claims

1. A closure and stiffening system for the rear portal frame of vans, of the type in which said frame defines an aperture (1) closed by at least one door (2) wing hinged to a vertical side of said frame, fastening means being provided rigid with said at least one door wing and consisting of a rod (5) parallel to the hinging axis of the door wing and fixed to this latter in such a manner as not to be able to slide axially, and being provided at its ends with two claws (8) which engage in suitable seats fixed to the frame to transmit forces both perpendicular and parallel to the plane of the door wing, characterised by comprising, in combination with said fastening means, stiffening means (10) consisting of a further rod positioned in a direction not parallel to the hinging axis of the door wing and constrained to this latter in such a manner as to be able to slide freely in the direction of its own axis, means (12) located at the end of said rod to engage in conjugate means (13;130) rigid with the frame (1) to transmit forces in the direction of the rod, and means (11) for putting the rod under tension.

2. A system as claimed in claim 1, characterised in that the aperture defined by the frame is closed by two door wings (2,3).

3. A system as claimed in claim 1, characterised in that at least one (130) of the conjugate means (13;130) rigid with the frame (1) can be subjected to movement in order to put the rod under tension.

4. A system as claimed in claim 3, characterised in that the movement is transmitted to said at least one conjugate means rigid with the frame by a cam mechanism (132).

5. A system as claimed in claim 1, characterised in that said further rod is divided into two aligned parts (10a,10b) connected together by means (16,20;24,25) whcih are of variable length.

6. A system as claimed in claims 1 and 5, characterised in that the means which connect together the two facing ends of the two parts of the rod are hydraulic means.

7. A system as claimed in claims 1 and 5, characterised in that the means which connect together the two facing ends of the two parts (10a,10b) of the rod comprise a first lever (16) pivoted to one (10b) of the parts and at least one connection piece (20) pivoted to the other part (10a) and to a point (19) on the first lever (16).

8. A system as claimed in claims 1 and 5, characterised in that the means which connect together the two facing ends of the two parts (10a,10b) of the rod comprise on each of the facing ends of said parts a perpendicular pin (24) slidable within an eccentric arched slot (25) provided in a disc (26) which can rotate under the action of a handle (31), the axis of said slots extending at an increasing distance from the centre of the disc.

9. A system as claimed in claims 1 and 5, characterised in that each of the facing ends of the rod parts (10a,10b) comprises a pin (24) perpendicular to the rod and projecting from both sides, to engage in a pair of opposing spiral slots (25) each provided in a disc (26) of a pair of coaxial parallel discs rigid with one and the same hub (27) mounted on a pin (28) which is perpendicular to the plane of the door wing and is rigid therewith, a handle (31) being fixed to said discs for their rotation.

10. A system as claimed in claim 1, characterised in that the means (12) provided at the two ends of the rod are a hammer-shaped head, the arms of which are arranged to engage in the conjugate means (13) rigid with the frame (1) and having the shape of a fork hook, in order to put and maintain the rod under tension.

## Patentansprüche

1. Verschluß- und Versteifungssystem für den hinteren Türrahmen von Lastwagen, wobei der Rahmen eine Öffnung (1) bestimmt, die von mindestens einem an einer vertikalen Seite des Rahmens eingehängtem Türflügel (2) verschlossen ist, wobei starr mit dem mindestens einen Türfügel verbundene Befestigungseinrichtungen vorgesehen sind, die eine Stange (5) parallel zu der Einhängeachse des Türflügels aufweisen und die mit letzterem so verbunden sind, daß sie in axialer Richtung nicht verrutschen können, und die an ihren Enden mit zwei Klauen (8) ausgestattet sind, die in geeignete an dem Rahmen befestigte Aufnahmen bzw. Sitze eingreifen, um Kräfte sowohl senkrecht als auch parallel zur Fläche bzw. Ebene des Türflügels zu übertragen,
**gekennzeichnet durch**
mit den Befestigungseinrichtungen verbundene Versteifungseinrichtungen (10), die eine weitere Stange aufweisen, welche nicht parallel zu der Einhängeachse des Türflügels positioniert ist und die mit diesem so verbunden ist, daß sie in Richtung ihrer eigenen Achse frei beweglich ist, und Einrichtungen (12) am Ende der Stange, um in paarweise Einrichtungen (13,130) einzugreifen, die fest mit dem Rahmen verbunden sind, um Kräfte in Richtung der Stange zu übertragen, und Einrichtungen (11), um die Stange unter Spannung zu setzen.

2. System nach Anspruch 1,
**dadurch gekennzeichnet,** daß
die vom Rahmen bestimmte Öffnung durch zwei Türflügel (2,3) verschlossen ist.

3. System nach Anspruch 1,
**dadurch gekennzeichnet,** daß
mindestens eine (130) der mit dem Rahmen (1) fest verbundenen paarweisen Einrichtungen (13,130) einer Bewegung unterworfen werden kann, um damit die Stange unter Spannung zu setzen.

4. System nach Anspruch 3,
**dadurch gekennzeichnet,** daß
die Bewegung zu der mindestens einen mit dem Rahmen fest verbundenen Einrichtung durch ein Kurvengetriebe (132) übertragen wird.

5. System nach Anspruch 1,
**dadurch gekennzeichnet,** daß
die weitere Stange in zwei miteinander fluchtende Teile (10a,10b) aufgeteilt ist, die miteinander durch in der Länge verstellbare Einrichtungen (12, 20;24,25) verbunden sind.

6. System nach Anspruch 1 oder 5,
**dadurch gekennzeichnet,** daß
die Einrichtungen, die die zwei einander gegenüberliegenden Enden der zwei Teile der Stange miteinander verbinden, hydraulische Einrichtungen sind.

7. System nach Anspruch 1 oder 5,
**dadurch gekennzeichnet,** daß
die Einrichtungen, die die zwei einander gegenüberliegenden Enden der zwei Teile (10a,10b) der Stange miteinander verbinden, einen ersten Hebel (16) aufweisen, der an einem der Teile (10b) drehbar gelagert ist und mindestens ein Verbindungsteil (20) aufweisen, das an dem anderen Teil (10a) und an einem Punkt (19) auf dem ersten Hebel (16) drehbar gelagert ist.

8. System nach Anspruch 1 oder 5,
**dadurch gekennzeichnet,** daß
die Einrichtungen, die die zwei einander gegenüberliegenden Enden der zwei Teile (10a,10b) der Stange miteinander verbinden, auf jeder Seite der einander gegenüberliegenden Enden der Teile einen senkrechten Bolzen (24) aufweisen, der in einer exzentrischen kurvenförmigen Aussparung (25) verschiebbar ist, die in einer Scheibe (26) vorgesehen ist, die durch die Bewegung an einem Handgriff (31) drehbar ist, wobei die Achse der Aussparungen sich auf einem sich vergrößernden Abstand vom Mittelpunkt der Scheibe bewegt.

9. System nach Anspruch 1 oder 5,
**dadurch gekennzeichnet,** daß
jedes der einander gegenüberliegenden Enden der Teile (10a,10b) der Stange einen Bolzen (24) aufweist, der senkrecht zu der Stange ist und über beide Seiten übersteht, um in ein Paar entgegengesetzter kurvenförmiger Aussparungen (25) einzugreifen, die auf einer Scheibe (26) von einem Paar koaxialer paralleler Scheiben mit ein und derselben Nabe (27) vorgesehen sind, welche mit einem Bolzen (28), der senkrecht zur Fläche des Türflügels steht, fest verbunden ist, und wobei ein Handgriff (31) an den Scheiben befestigt ist, um deren Drehbewegung zu ermöglichen.

10. System nach Anpsruch 1,
**dadurch gekennzeichnet,** daß
die an den zwei Enden der Stange vorgesehenen Einrichtungen mit einem hammerförmigen Kopf ausgestattet sind, wobei deren Arme so angeordnet sind, daß sie in die paarweisen Einrichtungen (13) eingreifen können, die fest am Rahmen angeordnet sind und die die Form von gabelförmigen Haken besitzen, um damit die Stange unter Druck zu setzen und zu halten.

## Revendications

1. Système de fermeture et de renforcement pour encadrement de porte arrière de camions, du type dans lequel ledit encadrement définit une ouverture (1) fermée par au moins un battant de porte (2) articulé sur un côté vertical dudit encadrement, des moyens de fixation étant prévus solidaires d'au moins l'un des battants de porte et étant constitués par une barre (5) parallèle à l'axe d'articulation du battant de porte et étant fixée à ce dernier, de telle façon qu'elle ne puisse pas coulisser axialement, ladite barre comportant à ses extrémités deux griffes (8) qui pénètrent dans des sièges appropriés fixés à l'encadrement de façon à transmettre des forces à la fois perpendiculairement et parallèlement au plan du battant de porte, ledit système étant caractérisé en ce qu'il comprend, en combinaison avec lesdits moyens de fixation, des moyens de renforcement (10) constitués par une autre barre, positionnée dans une direction qui n'est pas parallèle à l'axe d'articulation du battant de la porte, et qui est contrainte sur ce dernier de façon qu'elle puisse coulisser librement dans la direction de son axe propre, des moyens (12) situés à l'extrémité de ladite barre de façon à venir s'engager dans des moyens conjugués (13, 130) solidaires de l'encadrement (1), de façon à transmettre les forces dans la direction de la barre, et des moyens (11) pour placer la barre sous tension.

2. Système selon la revendication 1, caractérisé en ce que l'ouverture définie par l'encadrement est fermée par deux battants de porte (2, 3).

3. Système selon la revendication 1, caractérisé en ce que au moins l'un (130) des moyens conjugués (13, 130) solidaires de l'encadrement (1) peut être soumis à un déplacement de façon à placer la barre sous tension.

4. Système selon la revendication 3, caractérisée en ce que le mouvement est transmis à l'un au moins desdits moyens conjugués solidaires de l'encadrement par l'intermédiaire d'un mécanisme (132) à came.

5. Système selon la revendication 1, caractérisé en ce que ladite autre barre est divisée en deux parties alignées (10a, 10b) reliées ensemble par des moyens (16, 20 ; 24, 25) qui sont de longueur variable.

6. Système selon les revendications 1 et 5, caractérisé en ce que les moyens, qui relient ensemble les deux extrémités qui se font face des deux parties de la barre, sont des moyens hydrauliques.

7. Système selon la revendication 1 et la revendication 5, caractérisé en ce que les moyens, qui relient ensemble les deux extrémités qui se font face des deux parties (10a, 10b) de la barre, comprennent un premier levier (16) articulé à l'une (10b) des parties et au moins une pièce de liaison (20) articulée à l'autre partie (10a) et en un point (19) sur le premier levier (16).

8. Système selon les revendications 1 et 5, caractérisé en ce que les moyens, qui relient ensemble les deux extrémités qui se font face des deux parties (10a, 10b) de la barre, comprennent sur chacune des extrémités qui se font face desdites parties, une goupille (24) perpendiculaire coulissant dans une fente (25) en forme d'arc excentrique prévue dans un disque (26) qui peut tourner sous l'action d'un levier (31), l'axe desdites fentes s'étendant à une distance qui va en augmentant depuis le centre du disque.

9. Système selon les revendications 1 et 5, caractérisé en ce que chacune des extrémités qui se font face des parties (10a, 10b) de la barre comprennent une goupille (24) perpendiculaire à la barre et faisant saillie des deux côtés, de façon à s'engager dans une paire de fentes (25) en spirale, disposées en opposition, chacune étant prévue dans un disque (26) d'une paire de disques parallèles coaxiaux, solidaires d'un et même moyeu (27) monté sur une goupille (28) qui est perpendiculaire au plan du battant de porte et est solidaire de lui, un levier (31) étant fixé auxdits disques pour permettre leur rotation.

10. Système selon la revendication 1, caractérisé en ce que les moyens (12) prévus aux deux extrémités de la barre sont une tête en forme de marteau dont les bras sont disposés de façon à pénétrer dans des moyens conjugués (13) solidaires de l'encadrement (1) et ayant la forme d'un crochet en forme de fourche, de façon à placer et maintenir la barre sous tension.
